# EUROPÄISCHE PATENTSCHRIFT

(11) **EP 4 572 937 B1**
(45) Veröffentlichungstag und Bekanntmachung des Hinweises auf die Patenterteilung: **14.10.2026**
(21) Anmeldenummer: 23731256.6
(22) Anmeldetag: 07.06.2023
(51) Int. Cl.: B29C 49/42

(54) **VORRICHTUNG UND VERFAHREN ZUM NACHBEHANDELN VON BEHÄLTERERZEUGNISSEN**
APPARATUS AND METHOD FOR THE FOLLOW-UP TREATMENT OF CONTAINER PRODUCTS
DISPOSITIF ET PROCÉDÉ DE POST-TRAITEMENT DE PRODUITS DE TYPE RÉCIPIENT

(30) Priorität: 17.08.2022 DE 102022003000
(43) Veröffentlichungstag der Anmeldung: 25.06.2025
(73) Patentinhaber: Rommelag Engineering GmbH, 74429 Sulzbach-Laufen (DE)
(72) Erfinder: MUFF, Alexander, 6018 Buttisholz (CH); KARASCH, Michel, 73491 Neuler (DE); CHIULLI, Maurizio, 74417 Gschwend (DE); LÜSCHER, Thomas, 5037 Muhen (CH)
(74) Vertreter: Bartels und Partner, Patentanwälte
(86) Internationale Anmeldenummer: PCT/EP2023/065178
(87) Internationale Veröffentlichungsnummer: WO 2024/037752

(56) Entgegenhaltungen:
- EP-A1- 2 987 618
- EP-A2- 0 661 111
- CN-U- 205 044 140

## Beschreibung

Die Erfindung betrifft eine Vorrichtung zum Nachbehandeln, insbesondere zum Kühlen, von Behältererzeugnissen mit den Merkmalen im Oberbegriff von Anspruch 1.

Durch EP 3 099 467 B1 ist eine Vorrichtung zum Herstellen von Behältererzeugnissen aus Kunststoffmaterial bekannt, die Teil eines eine nicht-getaktete BFS-Herstellmaschine verlassenden Endlosbandes sind, die vorangehend mittels einer Formeinrichtung geformt, mittels einer Fülleinrichtung mit einem vorgebbaren Behälterinhalt versehen und mittels einer Schließeinrichtung geschlossen wurden, wobei die Formeinrichtung Einzel-Formteile aufweist, die paarweise aufeinander zu- und voneinander wegbewegt werden, um eine Herstellform zu schließen bzw. zu öffnen, in der das jeweilige Behältererzeugnis geformt und mit dem Behälterinhalt versehen sowie geschlossen wird. Die fertig hergestellten Behältererzeugnisse werden dann in Hintereinanderabfolge als Endlosband einer Nachbehandlungszone zugeführt, in der auf das jeweilige Behältererzeugnis und/oder auf den jeweiligen Behälterinhalt eine Wirkung, insbesondere eine temperaturbeeinflussende Wirkung ausgeübt wird. Hierdurch ist eine gesteuerte Temperaturbeeinflussung auf das jeweils befüllte und verschlossene Behältererzeugnis während einer Nachbehandlungsphase des Endlosbandes in der Nachbehandlungszone erreicht, um die Stabilität und insbesondere die biologische Aktivität des jeweiligen Füllgutes zu erhalten und um gleichzeitig gut ausgeformte und dichte BFS-Behältnisse herzustellen. Dergestalt wird das befüllte und sich in dem Endlosband in Hintereinanderabfolge jeweils befindliche Behältererzeugnis der Nachbehandlungszone zugeführt und durch eine konvektive Kühlung des Behältererzeugnisses von vorzugsweise mindestens 20 Sekunden Dauer gekühlt. Bei Produkten für medizinische Zwecke geschieht dies unter streng kontrollierten Good Manufacturing Practices-Bedingungen (GMP-Bedingungen), insbesondere betreffend die gerichteten Luftströmungen im Reinraum.

Bei getakteten Maschinen werden kleinvolumige Behälter (Füllvolumen typischerweise weniger als 30 ml) oder Gruppen davon in einem Rahmenverbund hergestellt. Hierzu wird in der Extrusionsposition der BFS-Anlage ein Kunststoffschlauch extrudiert, der in eine gekühlte, mehrteilige Form aufgenommen, der untere Behälterteil, der Behälterkörper, durch Unterdruck ausgeformt und durch das Anlegen an die Form abgekühlt. Sodann wird der Kunststoffschlauch abgetrennt und - in der gekühlten Form befindlich - zu einer Füllposition transferiert. Dieser Transfer dauert typischerweise 0,5 Sekunden bis 2 Sekunden. Auch in dieser Zeit kühlt der Behälterkörper durch Kontakt mit der gekühlten Form weiter ab. Das Abkühlen des Kopfbereiches des Behälters wird bewusst weitgehend vermieden. Sodann erfolgt die Befüllung des Behälterkörpers sowie das Verschließen des Behälters durch Schließen der Kopfbacke der Form und Verschweißen des noch heißen Behälterkopfes. Ein Blas-Vorgang zur Ausformung ist bei solch kleinvolumigen Behältern - im Gegensatz zu großvolumigen Behältern wie Flaschen mit Füllvolumen von 30 ml und mehr - nicht notwendig.

**In** US 11 027 862 B2 wird für solche BFS-Maschinen ein zusätzlicher Kühlschritt für den jeweils ausgeformten, jedoch unbefüllten Behälter empfohlen, wobei der Kühlschritt darin besteht, zusätzlich zwei bis fünf Sekunden nach dem Ausformen des Behälters mit dem Befüllen zu warten und so den Füllvorgang zeitlich zu verzögern. Dergestalt wird Wärme vom leeren Behälterkörper durch Kontakt auf die gekühlte Form übertragen; wobei der Kopf des Behälters allerdings "heiß" bleiben muss, da der Kopf sich sonst nach dem Befüllen nicht mehr sicher ausformen und verschweißen respektive verschließen lässt. Insoweit kann der Behälter nur teilweise gekühlt werden.

Bei beiden vorgenannten Lösungsansätzen fällt auf, dass der bei der Herstellung des jeweiligen Behälters entstehende Rahmenverbund, der beispielhaft in Fig. 1 der EP 2 180 990 B1 gezeigt ist, einschließlich einer sogenannten Abfallrandzone mit gekühlt werden muss, was sehr hohe Kühlleistungen und/oder Kühlzeiten notwendig macht, bedenkt man, dass die Abfallzone, insbesondere bei Taktmaschinen, oft mehr als 30 Prozent des gesamten eingesetzten Kunststoffes ausmacht. Hierdurch ist die am Füllgut einwirkende Wärmemenge gegenüber der Wärmemenge aus dem eigentlichen Behälter deutlich erhöht. Dies macht nach dem Entformen hohe Kühlleistungen, insbesondere große Volumenströme an Kühlluft, notwendig, was nachteilig ist, da so die sich einstellenden Richtungen der Luftströmung in dem Reinraum unkontrollierbar verändert werden.

Diese an sich sehr vorteilhaften Herstellverfahren stellen allesamt mehr oder minder Hochtemperaturverfahren dar, da bei den mit Vorteil einzusetzenden Kunststoffmaterialien, die Homogenisierung der aufgeschmolzenen Polymermasse, die Verteilung im Schlauchkopf der BFS-Herstellmaschine sowie das Ausformen und insbesondere das dichte Verschweißen des Behälters relativ hohe Temperaturen notwendig macht. Aufgrund des hohen Temperaturniveaus bei der Formgebungsphase sind die an sich vorteilhaften BFS-Verfahren für temperaturempfindliches Füllgut weniger gut geeignet. Bei Behältnissen in Ampullenform kommen als Füllgut häufig Formulierungen biotechnologisch hergestellter Medikamente und Diagnostika in Betracht. Zur Gruppe derartiger Substanzen gehören beispielsweise therapeutische Proteine, Gerinnungsfaktoren, zahlreiche Hormone, wie Insulin, Epoetin oder Wachstumshormone, monoklonare Antikörper sowie biotechnologisch hergestellte Impfstoffe. Wegen der temperaturbedingten Probleme kommen derartige Substanzen in der Regel nicht in BFS-Behältnissen, sondern in konventionellen Glasfläschchen auf den Markt.

In der Fachwelt ist diese Problematik bereits thematisiert worden und ist Gegenstand aktueller wissenschaftlicher Diskussionen. Diesbezüglich ist auf die Veröffentlichung zu verweisen: LIU, Wei; FAULHABER, Scott; SANE, Samir U.; LAM, Philippe: Biopharmaceutical Manufacturing Using Blow-Fill-Seal Technology. In: BioPharm International, Band 24, Ausgabe 7 (Juli 2011), Seiten 22 bis 29. Die Autoren schlagen zur Verhinderung der Degradation des Füllgutes vor, deren pharmazeutische Formulierung sehr kalt zuzuführen. Bei für hohe Ausstoßraten schnell auszuführenden Prozessen im Rahmen der BFS-Technologie ist dies jedoch nur schwierig umsetzbar, weil eine Temperaturerniedrigung zu einer Viskositätserhöhung des Füllgutes führt, was bei gleicher Füllzeit erhöhte Fülldrücke erfordern würde, die sich aber wegen der Scherempfindlichkeit der meisten Proteine wiederum nachteilig auf die Stabilität des Füllgutes auswirken können. Nachteilig an gekühlten Zuleitungen des Füllgutes mit Temperaturen von weniger als 15 °C ist ferner, dass es zur Kondensation von Luftfeuchtigkeit in der BFS-Herstellmaschine und insbesondere an deren Füllrohr kommen kann. Dies hat zur Folge, dass Kondenswasser an der Behälteröffnung abgestreift werden kann, was wiederum zu Undichtigkeit beim Verschweißen des Behälters führen kann. Wenn, was entsprechend naheliegend wäre, niedrige Formtemperaturen von weniger als 15 °C eingestellt werden, kommt es ebenfalls zu Kondensationseffekten, die wiederum eine aufwändige und teure Trockenluftkonditionierung der Formoberflächen erfordern und zu Temperaturen am Kopfbereich und an der Kopfbacke der Form führen würden, die ein dichtes Verschweißen nicht mehr sicher gewährleisten würden. Eine Erniedrigung der Behälterwandstärke ist ebenfalls nur selten eine sinnvolle und effiziente Stellgröße zur Minimierung der verfügbaren, am Füllgut wirkenden Wärmemenge, da die Behälterwandstärken von vorgegebenen Parametern bestimmt werden, beispielsweise von dem zulässigen Permeationsverlust (Wasserverlust über die Lagerdauer durch Permeation) und den mechanischen Spezifikationen (mechanische Stabilität, Öffnungsverhalten, Deformierbarkeit zwecks Entleeren etc.).

Die CN 205 044 140 U beschreibt eine Vorrichtung zum Nachbehandeln, insbesondere zum Kühlen, von Behältererzeugnissen, mit den Merkmalen im Oberbegriff von Anspruch 1, wobei die Behältererzeugnisse mittels eines Blasform-, Füll- und Schließverfahrens hergestellt sind und die einer Nachbehandlungszone zuführbar sind, die auf das jeweilige Behältererzeugnis eine beeinflussende, insbesondere kühlende, Wirkung ausübt, wobei die Behältererzeugnisse getrennt voneinander vereinzelt oder in einzelne, voneinander getrennte Gruppen mit mehreren Behältererzeugnissen zusammengefasst in die Nachbehandlungszone eintreten, die mit mindestens einem Steuermittel versehen auf die Behältererzeugnisse einwirkend deren Aufenthaltsdauer in der Nachbehandlungszone bestimmen.

Weitere Vorrichtungen zum Nachbehandeln von Behältererzeugnissen gehen aus der EP 2 987 618 A1 und der EP 0 661 111 A2 hervor.

Ausgehend von diesem Stand der Technik liegt der Erfindung die Aufgabe zugrunde, die bekannten Lösungen unter Beibehalten ihrer Vorteile dahingehend weiter zu verbessern, dass eine energieeffiziente und wirtschaftliche Nachbehandlung, insbesondere Kühlung, von befüllten und verschlossenen BFS-Behältererzeugnissen erreicht ist. Eine dahingehende Aufgabe löst eine Vorrichtung mit den Merkmalen des Patentanspruches 1 in seiner Gesamtheit.

Gemäß dem Kennzeichen von Anspruch 1 ist vorgesehen, dass die Behältererzeugnisse schwerkraftunterstützt im freien Fall die Nachbehandlungszone bis zum Wirksamwerden des jeweiligen Steuermittels auf die Behältererzeugnisse durchqueren. Hierdurch ist die Dauer bis zum Eintritt des Behältererzeugnisses in die Nachbehandlungszone verkürzt, so dass eine Wärmeeinwirkung auf das Füllgut minimiert wird und so die Qualität des Füllgutes nicht wesentlich beeinträchtigt wird.

Dadurch, dass die Behältererzeugnisse voneinander getrennt oder in einzelne, voneinander getrennte Gruppen mit mehreren Behältererzeugnissen zusammengefasst in die Nachbehandlungszone eintreten, die mit entsprechenden Steuermitteln versehen auf die Behältererzeugnisse einwirkend deren Aufenthaltsdauer in der Nachbehandlungszone bestimmen, ist eine Nachbehandlungszone für die befüllten und sicher verschlossenen Behältererzeugnisse geschaffen, die es erlaubt, unabhängig von den Taktzeiten der eigentlichen BFS-Herstellmaschine, die erhaltenen Behälter so lange in der Nachbehandlungszone zu belassen, bis der vorgebbare Nachbehandlungsschritt durchgeführt ist, insbesondere die gewünschte Temperatur erreicht ist. Insbesondere sind die Behältererzeugnisse nicht mehr in Hintereinanderabfolge Teil einer fortlaufenden Herstellkette in Form eines Endlosbandes, so dass die Nachbehandlung und ihre Dauer unabhängig vom Herstelltakt der BFS-Maschine vorgegeben werden können, was eine Vielzahl von Freiheiten im Rahmen der Nachbehandlung, insbesondere dem Durchführen einer Kühlung, ermöglicht. Dergestalt kann auch sehr temperaturempfindliches Füllgut in BFS-Behältern abgefüllt werden.

Bei einer bevorzugten Ausführungsform der erfindungsgemäßen Vorrichtung ist vorgesehen, dass in einem der Nachbehandlung vorangehenden Herstellschritt das jeweilige Behältererzeugnis zumindest teilweise, vorzugsweise vollständig, von einem bei der Herstellung entstehenden Rahmenabfall getrennt ist. Hierdurch muss die in der Abfallrandzone enthaltene Wärmemenge nicht mehr durch Kühlen abgeführt werden. Insoweit ist dann die durch die Nachbehandlungszone abzuführende Wärmemenge nur noch vorgegeben durch das eigentliche Behältererzeugnis nebst dem Füllgut. Insgesamt erlaubt die Vorrichtung das Durchführen eines Verfahrens zur effizienten Kühlung von befüllten und verschlossenen BFS-Behältererzeugnissen in einem Reinraum, insbesondere von BFS-Ampullen für medizinische Zwecke.

Bei einer weiteren bevorzugten Ausführungsform der erfindungsgemäßen Vorrichtung ist vorgesehen, dass die Nachbehandlungszone mindestens einen Durchgangsschacht für das Durchschleusen der Behältererzeugnisse aufweist, der bevorzugt bodenseitig mittels der Steuermittel den Ausschleusvorgang aus dem Durchgangsschacht für die Behältererzeugnisse ermöglicht oder stoppt. Dergestalt lässt sich die Aufenthaltsdauer des jeweiligen Behältererzeugnisses in der Nachbehandlungszone vorgeben und überraschenderweise hat sich gezeigt, dass durch den Aufprall respektive das Aufstoßen des Behältererzeugnisses auf dem Boden, der den Durchgangsschacht zeitweise verschließt, es zu einer vorteilhaften Durchmischung des Behälterinhalts kommt, ohne dass eine wesentliche Erhöhung der Benetzung der Innenoberfläche des Behälters stattfindet. Dergestalt ist auch eine Vergleichmäßigung des Wärmeinhalts des Behältererzeugnisses geschaffen, was die Kühlung mittels der Nachbehandlungszone verbessern hilft.

Bei einer besonders bevorzugten Ausführungsform der erfindungsgemäßen Vorrichtung ist vorgesehen, dass die Nachbehandlungszone entlang einer Falllinie für die Behältererzeugnisse mehrere, hintereinander angeordnete Durchgangsschächte mit den einzelnen Steuermitteln aufweist. Vorzugsweise ist dabei der jeweilige Durchgangsschacht als Kammer ausgebildet, die an ihren freien, einander gegenüberliegenden Stirnseiten für das Durchschleusen der Behältererzeugnisse nach oben und unten hin offen ist, wobei die Öffnung mittels der Steuermittel, vorzugsweise unter Einbezug eines verfahrbaren Bodenteils, verschließbar ist, und dass die einander gegenüberliegenden Behälterwände der Behältererzeugnisse entlang der benachbarten Kammerwände der jeweiligen Kammer mit einem vorgebbaren Abstand durchgeschleust werden. Dergestalt ist die Nachbehandlungszone in mindestens zwei voneinander separierbare Teilbereiche respektive Kammern unterteilt, was eine Art Stufenkühlung ermöglicht. Dabei wird in der Abfolge in der vorangehenden Vorkammer zunächst die Vorkühlung des Behältererzeugnisses und in der in Durchschleusungsrichtung gesehen nachfolgenden Hauptkammer eine Zusatzkühlung durchgeführt. Dabei sind beide Kammern, die den Durchgangsschacht zumindest teilweise begrenzen, durch den zwischen ihnen verschiebbaren Boden respektive das verfahrbare Bodenteil zeitweise voneinander getrennt. Durch horizontales Verschieben des bewegbaren Bodenteils gelangen die Behältererzeugnisse vereinzelt oder in einzelnen Behälterblöcken zusammengefasst unter Beibehaltung einer senkrechten Behälter-Orientierung, wie sie durch die BFS-Herstellmaschine vorgegeben ist, durch Schwerkraft von der vorgelagerten Vorkammer unmittelbar in die räumlich anschließende Hauptkammer.

Bei einer weiteren bevorzugten Ausführungsform der erfindungsgemäßen Vorrichtung ist dabei vorgesehen, dass jede Kammer mindestens einen Einlass für ein Temperiermedium, wie ein Kühlfluid, aufweist. Die Kühlung erfolgt in der jeweiligen Kammer durch ein Kühlfluid, beispielsweise in Form einer Flüssigkeit, eines Gases oder Gasgemisches, wie Kohlendioxid, Stickstoff etc., bevorzugt wird aber übliche Umgebungsluft eingesetzt. Die bei der Kühlung entstehende erwärmte Abluft tritt im oberen Bereich der jeweiligen Kammer aus und kann abgeführt werden.

Vorzugsweise ist dabei vorgesehen, dass parallel zu den jeweiligen Kammerwänden einer Kammer mehrere Eintrittsdüsen angebracht sind, die mit ihrer Abgabeseite die Kammerwand durchgreifen und dergestalt das Temperiermedium in den Durchschleusraum der Kammer einbringen, vorzugsweise an einer Stelle, bei der die Behältererzeugnisse in der Kammer mittels den Steuermitteln derart angehalten sind, dass das Temperiermedium, vorzugsweise in einem rechten Winkel, auf das Behältererzeugnis und/oder den Behälterinhalt trifft. Bevorzugt erfolgt das Auftreffen des Temperiermediums nahe dem Boden des Behältererzeugnisses, besonders bevorzugt wird das Temperiermedium so gelenkt, dass es im Wesentlichen unterhalb des Füllspiegels des Behältererzeugnisses auftrifft. Durch die erfindungsgemäße Stufenkühlung ergeben sich Gesamt-Kühlzeiten von deutlich weniger als 20 Sekunden, so dass sich bei einer Zwei-Kammeranordnung für jede Kammer eine Kühlzeit von weniger als ca. 10 Sekunden ergibt. Diese Kühlzeiten ergeben sich auch bei Einsatz relativ niedriger Kühlleistungen. Somit braucht keinesfalls der Herstelltakt für die Behälter in nachteiliger Weise verlängert zu werden und die an sich hohe Effizienz respektive Wirtschaftlichkeit des BFS-Herstellprozesses bleibt im Rahmen der Nachbehandlung erhalten.

Die Stufenkühlung braucht nicht auf zwei Stufen mit zwei Kammern eingeschränkt zu sein; vielmehr kann nur mit einer Stufe gekühlt werden oder - unter Einsatz zusätzlicher weiterer Kammern - eine Drei- bzw. Mehrstufenkühlung realisiert werden.

Besonders bevorzugt ist vorgesehen, dass das jeweilige Kammervolumen nicht größer als das 30-fache des Volumens des jeweiligen Behältererzeugnisses ist, bevorzugt kleiner als das 20-fache ist. Demgemäß ist es für das Temperieren respektive das Kühlen von Vorteil, das Volumen einer jeden Behandlungskammer der Nachbehandlungszone möglichst gering zu halten.

Bei einer weiteren bevorzugten Ausführungsform der erfindungsgemäßen Vorrichtung ist vorgesehen, dass der jeweilige Durchgangsschacht zwischen einer Übernahmeposition für das Einschleusen der Behältererzeugnisse und einer Übergabeposition für deren Ausschleusen mittels einer Verfahreinrichtung hin- und herbewegbar ist. Demgemäß kann während des eigentlichen Behandlungsvorganges mit der Nachbehandlungszone eine Bewegung des jeweils aufgenommenen Behältererzeugnisses erfolgen, was eine weitere Möglichkeit der Entkopplung darstellt zwischen der Herstellmaschine, die bevorzugt fortlaufend Behältererzeugnisse erzeugt und der Nachbehandlungszone, die diese Behälter zu temperieren hat, insbesondere zu kühlen hat.

Die Erfindung betrifft des Weiteren ein Verfahren zum Nachbehandeln von Behälterzeugnissen, die insbesondere nach einem Blasform-, Füll- und Schließverfahren hergestellt werden, unter Verwendung einer Vorrichtung wie vorstehend angegeben. Derart werden die Behältererzeugnisse nach zumindest teilweisem Entfernen des Rahmenabfalls vereinzelt oder in Gruppen zusammengefasst in die Nachbehandlungszone eingebracht, wobei mittels Steuermitteln die Aufenthaltsdauer der jeweiligen Behältererzeugnisse in der Nachbehandlungszone vorgegeben wird. Die Nachbehandlung braucht nicht auf Temperiervorgänge, insbesondere Kühl- oder zusätzliche Wärmebehandlungsvorgänge eingeschränkt zu sein. Hier sind durchaus auch andere, auch miteinander kombinierbare Nachbehandlungen möglich, wie beispielsweise Bestrahlen des befüllten Behälters, beispielsweise zur Leimzahlreduktion durch energiereiche Strahlung (sichtbares Licht, UV-Strahlung, Beta-, Gamma- oder Röntgenstrahlung, Mikrowellen) oder das Durchführen einer sensorischen Kontrolle, wie das Durchführen einer optischen Überprüfung des Behältererzeugnisses und/oder des Inhalts. So kann beispielsweise in einer ersten Kammer eine Kühlung erfolgen, in einer zweiten Kammer eine Bestrahlung und in einer weiteren Kammer eine Inspektion. Demgemäß brauchen die einzelnen Kammern der Nachbehandlungszone auch nicht in unmittelbarer Abfolge hintereinander angeordnet zu sein, sondern können unter Einnahme eines Zwischenraumes auch einen vorgebbaren axialen Abstand zueinander einnehmen.

Besonders bevorzugt wird das Verfahren dahingehend durchgeführt, dass das Eintragen eines Temperiermediums, insbesondere eines Kühlfluids, in die Nachbehandlungszone diskontinuierlich durchgeführt wird, wobei bevorzugt der Eintrag des Temperiermediums während des Einbringens des jeweiligen Behältererzeugnisses in die Nachbehandlungszone reduziert wird. Dergestalt lässt sich in besonders kontrollierter Weise die angestrebte Nachbehandlung durchführen.

Im Folgenden wird die erfindungsgemäße Vorrichtung anhand eines Ausführungsbeispiels nach der Zeichnung näher erläutert. Dabei zeigen in prinzipieller und nicht maßstäblicher Darstellung die
- Fig. 1 und 2: einen in stirnseitiger Ansicht angegebenen Rahmenverbund, bestehend aus einem Ampullenblock und dem Rahmenabfall, bzw. einen vom Rahmenabfall befreiten Ampullenblock, bei dem die Einzelbehältererzeugnisse mit Zwischenwandstegen lösbar miteinander als Handelseinheit verbunden sind;
- Fig. 3: in perspektivischer Draufsicht die wesentlichen Komponenten der Nachbehandlungsvorrichtung;
- Fig. 4: in stirnseitiger Draufsicht, teilweise in Schnittdarstellung teilweise in Ansicht die Vorrichtung nach der Fig. 3, die unterhalb einer Trenn-/Stanzeinrichtung angeordnet ist; und
- Fig. 5: eine teilweise Seitenansicht in Pfeilrichtung gemäß der Darstellung nach der Fig. 4 gesehen ohne die Trenn-/Stanzeinrichtung und ohne Transporteinrichtung in Form eines Förderbandes.

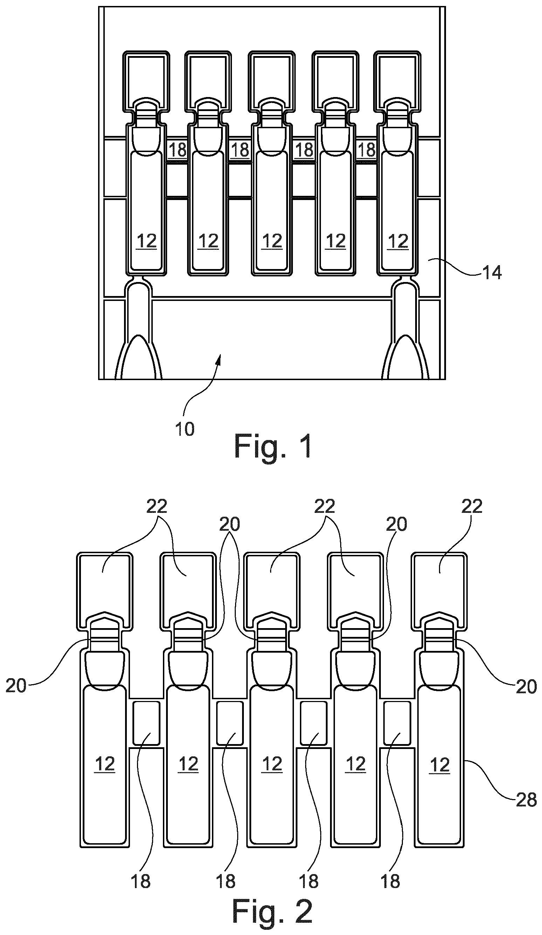

Der in der Fig. 1 gezeigte Rahmenverbund 10 besteht aus einem Kunststoffmaterial, beispielsweise aus einem Polyolefin-Werkstoff wie Polyethylen oder Polypropylen. Es sind jedoch auch Materialien einsetzbar, die cycloolefinische Materialien wie COP oder COC oder die aromatische Polyestermaterialien, wie PET, PEN oder PEF (Polyethylenfuranoat) enthalten.

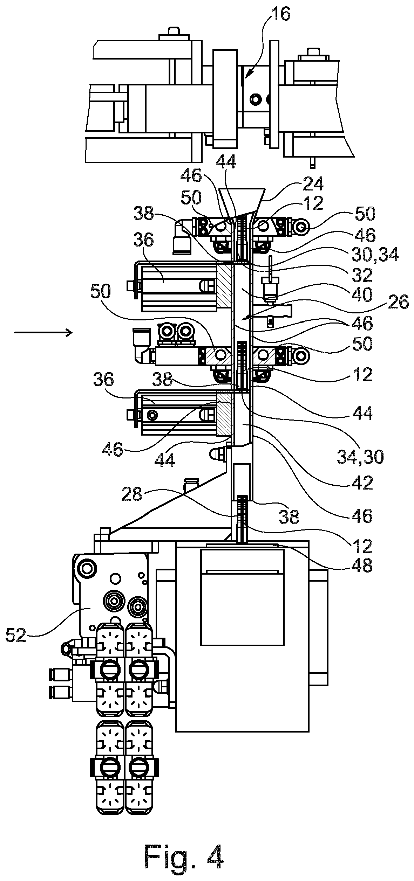

Der Rahmenverbund 10 setzt sich grundsätzlich aus den eigentlichen Behältererzeugnissen 12 zusammen sowie dem sogenannten Rahmenabfall 14, der von den eigentlichen Behältererzeugnissen 12 mittels einer Trenn- oder Stanzeinrichtung 16 zumindest teilweise zu trennen ist, von der ein Teil in Fig. 4 gezeigt ist und die beispielhaft im Detail Gegenstand der EP 2 180 990 B1 ist.

Sind die Behältererzeugnisse 12 von einem Großteil des Rahmenabfalls 14 getrennt, ergibt sich insoweit ein vom Rahmenabfall 14 weitgehend befreiter Ampullenblock gemäß der Darstellung nach der Fig. 2, wobei die einzelnen Behältererzeugnisse 12 oder Einzelampullen über stehengebliebene Zwischenwandstege 18 des Rahmenabfalls 14 miteinander verbunden sind, wobei die Zwischenwandstege 18 es ermöglichen, dass das jeweilige Behältererzeugnis 12 in der Art einer Twist-Off-Bewegung von den sonstigen im Block verbleibenden Behältern separiert werden kann.

Das jeweilige Behältererzeugnis 12 ist im Stand der Technik bekannt und beispielsweise in DE 38 31 957 C1 beschrieben. Dahingehende Ampullenblockerzeugnisse werden im Rahmen eines Blasform-, Füll- und Schließverfahrens (BFS-Verfahrens) hergestellt, das seit langem Stand der Technik ist. Insoweit zeigt die in den Fig. 1 und 2 gezeigte Grundform nur eine Art eines Ausführungsbeispiels und insbesondere können die Behältergeometrien in weit gezogenem Rahmen anwenderseitig vorgegeben und im BFS-Verfahren realisiert werden. Zur Freigabe des Behälterinhalts, regelmäßig in Form eines zuvor eingefüllten Fluids, dient meist ein Knebelverschluss 20, der über eine Handhabe 22 gleichfalls in der Art einer Twist-Off-Bewegung vom sonstigen Behältererzeugnis 12 über eine entsprechende Sollbruchstelle abtrennbar ist mit der Folge, dass dann über die freigelegte Behälteröffnung das Fluid, typischerweise für medizinische Zwecke, entnommen werden kann. Andere Behälteröffnungslösungen unter Einbezug von Tropferkappen oder Einlegeteilen, wie aus EP 3 151 807 B1 bekannt, sind gleichfalls realisierbar.

Der Ampullenblock gemäß der Darstellung nach der Fig. 2 verlässt dann in Blickrichtung auf die Fig. 4 gesehen vertikal nach unten die Stanzeinrichtung 16 und gelangt dergestalt auf die Eingangsseite 24 der als Ganzes mit 26 bezeichneten Nachbehandlungszone. Der vom Rahmenabfall 14 weitgehend befreite Ampullenblock gemäß der Darstellung nach der Fig. 2 bildet insoweit eine Gruppe 28 mit mehreren Behältererzeugnissen 12, die dahingehend zusammengefasst in die Nachbehandlungszone 26, über deren Eingangsseite 24 eintreten. Jede Gruppe 28, die die genannte Stanzeinrichtung 16 verlässt, gelangt dergestalt auf die Eingangsseite 24 der Nachbehandlungszone 26, so dass in einer Hintereinanderabfolge die jeweils eintretenden Gruppen 28 behandelt werden, insbesondere im Rahmen einer Temperierung gekühlt werden. Es besteht aber auch die Möglichkeit, dass einzelne Behältererzeugnisse 12 vonseiten einer BFS-Herstellmaschine unter Auslassen der Stanzeinrichtung 16 direkt auf die Eingangsseite 24 der Nachbehandlungszone 26 gelangen. Auch ist denkbar, dass im Bedarfsfall Behältererzeugnisse 12 zusammen mit dem Rahmenverbund gemäß der Darstellung nach der Fig. 1 auf diese Art und Weise vereinzelt der Nachbehandlungszone 26 zugeführt werden. Auch zusammen mit dem Rahmenverbund respektive dem Rahmenabfall 14 ergibt sich dann immer noch eine verbesserte Kühlwirkung für die dahingehend zu temperierenden Behälterfluide. Wie sich weiter aus der Fig. 4 ergibt, ist die Nachbehandlungszone 26 mit einzelnen Steuermitteln 30 versehen, die auf die Behältererzeugnisse 12 einwirkend deren Aufenthaltsdauer in der Nachbehandlungszone 26 bestimmen.

Die in Fig. 4 teilweise dargestellte Stanzeinrichtung 16 befindet sich unterhalb einer Füllposition einer nicht näher dargestellten BFS-Herstellmaschine und übernimmt dergestalt das in Fig. 1 dargestellte Erzeugnis, bestehend aus den Behältern 12, die in den sie umgebenden Rahmenabfall 14 eingebettet sind, wobei aufgrund des damit in Verbindung stehenden Kunststoff-Formgebungsprozesses, die Kunststoffmaterialien nach wie vor entsprechend "heiß" sind, was einen schädigenden Einfluss auf das Füllgut im jeweiligen Behältererzeugnis 12 haben kann, sofern dieses entsprechend temperaturempfindlich ist.

Nach dem Ausstanzen der Behältererzeugnisse 12 entsteht mit Wegfall des Rahmenabfalles 14 das Erzeugnis nach der Fig. 2, das in Fallrichtung von oben nach unten gesehen die Stanzeinrichtung 16 verlässt, um dann auf die trichterförmige Eingangsseite 24 der Nachbehandlungszone 26 zu gelangen. Mithin treten die Behältererzeugnisse 12 schwerkraftunterstützt, im freien Fall, in die Nachbehandlungszone 26 ein und durchqueren diese bis zum Wirksamwerden des jeweiligen Steuermittels 30 auf das jeweilige Behältererzeugnis 12. Insoweit weist die Behandlungszone 26 einen ersten Durchgangsschacht 32 für das Durchschleusen der Behältererzeugnisse 12 nach der Fig. 2 auf, wobei der Durchgangsschacht 32 als Steuermittel 30 einen horizontal verfahrbaren Boden 34 aufweist, der mittels eines zugehörigen Antriebes 36 in Blickrichtung auf die Fig. 4 gesehen in die Zeichenebene hinein verschiebbar ist, um dergestalt die Ausgangsseite 38 des ersten Durchgangsschachtes 32 freizugeben. Gemäß der Darstellung nach der Fig. 4 befindet sich der Boden 34 in seiner Schließ- oder Sperrstellung und die in einer Karte zusammengefassten Behältererzeugnisse 12 nach der Fig. 2 stehen mit ihrem Behälterkörper auf der Oberseite des Bodens 34 auf. Durch das Fallen auf den Boden 34 über die Eingangsseite 24 kommt es thermisch gesehen zu einer vorteilhaften Durchmischung des Behälterinhalts, was die Kühlung verbessert.

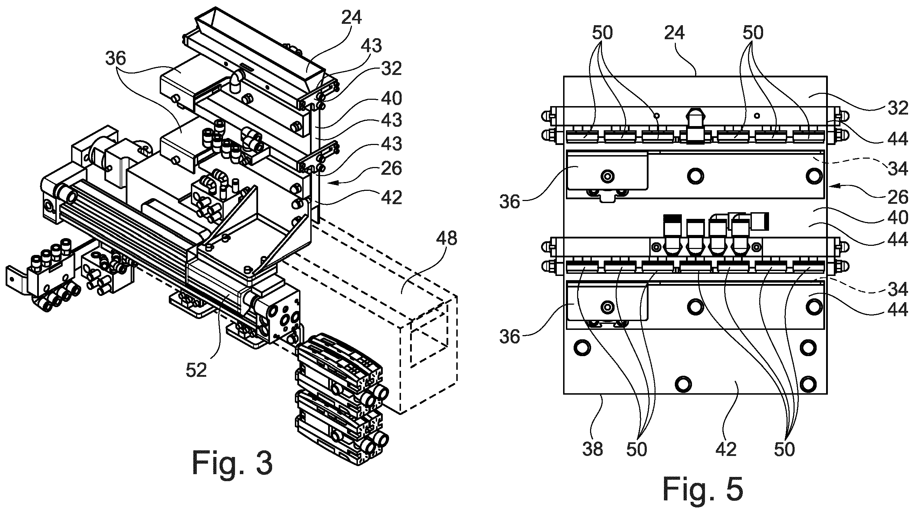

Wie sich des Weiteren aus der Fig. 4 ergibt, weist die Nachbehandlungszone 26 entlang einer fiktiven vertikalen Falllinie für die Behältererzeugnisse 12 mehrere hintereinander angeordnete Durchgangsschächte 32, 40 und 42 auf mit jeweils einzelnen Steuermitteln 30, und zwar von 32 zu 40 und von 40 zu 42. Der jeweilige Durchgangsschacht 32, 40, 42 ist als kastenförmige Kammer 44 ausgebildet mit im Inneren rechteckförmigem freiem Querschnitt, wobei jede Kammer 44 an ihren beiden einander gegenüberliegenden Stirnseiten für das Durchschleusen der Behältererzeugnisse 12 nach oben und unten hin offen ist, sofern der jeweilige Boden 34 nicht den zugeordneten Durchgangsschacht 32, 40 verschließt. Wie sich weiter aus der Darstellung nach der Fig. 4 ergibt, sind die einander gegenüberliegenden Behälterwände der Behältererzeugnisse 12 entlang der benachbarten Kammerwände 46 der jeweiligen Kammer 44 mit einem geringen vorgebbaren Abstand hindurchgeführt. Des Weiteren ist jede Kammer 44 entlang ihrer beiden gegenüberliegenden Längsseiten 43 (Fig. 3) geschlossen ausgeführt.

Gemäß der Darstellung nach der Fig. 4 befinden sich die Behältererzeugnisse 12 im Kartenverbund in dem zuoberst angeordneten Durchgangsschacht 32, der bodenseitig von dem zugehörigen Boden 34 verschlossen ist. Weitere Behältererzeugnisse 12 nach der Fig. 2, befinden sich im zweiten Durchgangsschacht 40, der nach unten hin wiederum von einem Boden 34 verschlossen ist, so dass die mittlere Kammer 44 an ihren freien Stirnseiten nach oben und unten hin jeweils von einem Boden 34 verschlossen ist. **Im** letzten und dritten Durchgangsschacht 42 befinden sich auf der Ausgangsseite 38 wiederum Behälterzeugnisse 12 nach der Fig. 2, die zum Abtransport aus der Nachbehandlungszone 26 auf ein antreibbares Förderband 48 aufgesetzt sind. Auch der Boden 34 zwischen zweitem Durchgangsschacht 40 und drittem Durchgangsschacht 42 ist mittels eines zugeordneten Antriebs 36 in derselben Richtung wie der zuoberst angeordnete Boden 34 innerhalb der Nachbehandlungszone 26 vor und zurück verfahrbar angeordnet.

Sobald das Förderband 48 ein Ampullenerzeugnis nach der Fig. 2 abtransportiert hat und die Temperierung, insbesondere Kühlung, für die Behältererzeugnisse 12 in der Nachbehandlungszone 26 abgeschlossen ist, können die beiden Böden 34 in ihre geöffnete, die Ausgangsseite des jeweiligen Durchgangsschachtes 32,40 freigebende Stellung verfahren werden, so dass der im zweiten Durchgangsschacht 40 befindliche Ampullenblock nach Durchqueren des dritten Durchgangsschachtes 42 auf das Förderband 48 und der darüber angeordnete Ampullenblock mit den Behältererzeugnissen 12 vom ersten Durchgangsschacht 32 in den zweiten Durchgangsschacht 40 gelangt. Anschließend kann die Stanzeinrichtung 16 wiederum ein Ampullenerzeugnis freigeben, das über die trichterförmige Eingangsseite 24 bei geschlossenem Boden 34 in den ersten Durchgangsschacht 32 gelangt. Es versteht sich, dass der Boden 34 für den zweiten Durchgangsschacht 40 dann gleichfalls geschlossen sein muss, um das darüber angeordnete, freigegebene Ampullenerzeugnis auffangen zu können. Dergestalt ist gemäß dem Ausführungsbeispiel nach der Fig. 4 mittels den beiden Durchgangsschächten 32, 40 eine Zwei-Stufen-Kühlung für die Behältererzeugnisse 12 erreicht, wobei die Länge des ersten Durchgangsschachtes 30 bevorzugt kürzer bemessen ist als der nachfolgende Durchgangsschacht 40.

Wie sich weiter aus der Fig. 4 ergibt, ist oberhalb des jeweiligen Bodens 34 und jeder Kammer 44 zugeordnet mindestens ein Einlass 50 für ein Temperiermedium, wie ein Kühlfluid vorhanden. Gemäß der Darstellung nach der Fig. 5 sind dabei für jede Kammer 44 jeweils sieben Schlitzdüsen als jeweiliger Einlass 50 vorhanden, die vorzugsweise auf gegenüberliegenden Seiten in derselben Höhe, an der Kammerwand 46 gegenüberliegend angeordnet sind. Demgemäß sind parallel zu den jeweiligen Kammerwänden 46 einer Kammer 44 verlaufend mehrere Eintrittsdüsen als dem jeweiligen Einlass 50 angebracht, die mit ihrer Abgabeseite die Kammerwand 46 durchgreifen und dergestalt das Temperiermedium in den Innen- oder Durchschleusraum der jeweiligen Kammer 44 einbringen. Dabei trifft das Temperiermedium vorzugsweise in einem rechten Winkel auf das Behältererzeugnis 12 mit seinem Behälterinhalt. Das Kühlfluid ist bevorzugt ein Gas oder Gasgemisch, insbesondere CO₂, Stickstoff oder vorzugsweise Luft. Die Einströmzeit des Kühlfluids je Kammer 44 beträgt weniger als 0,6 Minuten, bevorzugt weniger als 0,4 Minuten, besonders bevorzugt weniger als 0,3 Minuten.

Wie sich des Weiteren aus der Fig. 4 ergibt, ist das jeweilige Kammervolumen einer Kammer 44 nicht größer als das Dreißigfache des Volumens des jeweiligen Behältererzeugnisses 12. Bevorzugt ist das Volumen kleiner als das Zwanzigfache des Behältererzeugnisses 12. Wie sich insbesondere aus der Fig. 3 ergibt, ist die gesamte Nachbehandlungsvorrichtung mittels einer Verfahreinrichtung 52 gegenüber der Stanzeinrichtung 16 und dem Förderband 48 hin- und herverfahrbar angeordnet, wobei gemäß der Darstellung nach der Fig. 3 sich die Nachbehandlungszone 26 in einer rückwärtigen Verfahrposition unterhalb der in Fig. 3 nicht dargestellten Stanzeinrichtung 16 befindet. Dergestalt lässt sich das Einschleusen der Behältererzeugnisse 12 in die Nachbehandlungszone 26 in einem rückwärtigen Bereich sowie deren Ausschleusen auf das Förderband 48 in einem vorderseitigen Bereich von einem vorgegebenen Maschinentakt der BFS-Herstellmaschine und/oder der Stanzeinrichtung 16 zumindest teilweise entkoppeln.

Es hat sich als vorteilhaft erwiesen, nach Möglichkeit Relativbewegungen der Flüssigkeit zum Behältererzeugnis 12 zumindest bis zum Austritt aus der jeweiligen Kammer 44 weitestgehend zu vermeiden. Dies gelingt durch getaktete Strömungen des Kühlfluids, insbesondere dem Unterbrechen des Zustromes über den jeweiligen Einlass 50 während des Ein-/Austritts der Behältererzeugnisse 12 in die bzw. aus der jeweiligen Kammer 44. So wird ein Wackeln oder Vibrieren der Behältererzeugnisse 12 und ein unerwünschter, erhöhter Wärmeübergang vom Kunststoff auf den temperatursensiblen Behälterinhalt sicher verhindert.

Die Führung des Kühlfluides in der Hauptkammer, gebildet aus dem zweiten Durchgangsschacht 40, erfolgt in ähnlicher Weise wie in der Vorkammer 44 gebildet durch den ersten Durchgangsschacht 32, jedoch bevorzugt mit verschobener zeitlicher Taktung der Kühlströme über den jeweiligen Einlass 50. Überraschenderweise hat sich gezeigt, dass insbesondere durch die erfindungsgemäße Stufenkühlung, Gesamt-Kühlzeiten von deutlich weniger als 20 Sekunden erreichbar sind, also jeweils weniger als ca. 10 Sekunden pro Kammer 44, so dass auch bei niedrigen Kühlleistungen eine effiziente Kühlung erreicht ist. So muss der Herstelltakt für die Behältererzeugnisse 12 nicht nachteilig verlängert werden und die hohe Effizienz, sprich die Wirtschaftlichkeit des BFS-Herstellprozesses, bleibt erhalten.

Als weiter vorteilhaft hat sich erwiesen, den Spalt zwischen dem jeweiligen Behältererzeugnis 12, die auch in einem Behälterblock gemäß der Darstellung nach der Fig. 2 zusammengefasst sein können, und der Innen- oder Kammerwand 46 der jeweiligen Kammer 44 im Bereich von 1 mm bis 5 mm, bevorzugt von 2 mm bis 4 mm, zu wählen, was einerseits den Kühleffekt erhöht, andererseits ein Verkratzen der Behälteroberfläche sicher verhindert. Der Spalt zwischen Behältererzeugnis 12 und der jeweiligen Längsseite 43 einer Kammer 44 beträgt hingegen weniger als 0,5 cm, bevorzugt weniger als 0,3 cm.

Optional kann auch eine Drei-Stufen-Kühlung realisiert sein, sofern dies produktseitig notwendig werden sollte, wobei eine zusätzliche Hauptkammer mit Kühlung wie der zweite Durchgangsschacht 40 dann in analoger Weise entlang der vorgegebenen vertikalen Falllinie ergänzt werden muss.

Wie bereits dargelegt, ist die gesamte Nachbehandlungszone 26 mit ihren einzelnen Kammern 44 linear bewegbar in horizontaler Betriebsstellung geführt und die Behältererzeugnisse 12 werden unter Beibehaltung ihrer räumlichen Orientierung, bei der der Behälterkopf oben angeordnet ist, geführt, während sie sich in den einzelnen Kühlschächten 32, 40 von der Position unterhalb der Stanzeinrichtung 16 weiter nach unten zur Ausgangsseite 38 in Richtung des Förderbandes 48 hin mit den Kühlunterbrechungen bewegen. In der Übergabeposition öffnet sich in jedem Fall der Boden 34 der Hauptkammer 44 in Form des zweiten Durchgangsschachtes 40, so dass der insoweit gekühlte Behälter über den dritten Durchgangsschacht 42 an die Transporteinrichtung in Form des Förderbandes 48 übergeben werden kann.

In weiteren nicht näher beschriebenen Ausführungsformen können mehrere Kammern 44 im Schacht auch nebeneinander angebracht sein und durch eine Linearbewegung entsprechend transferiert werden.

In weiter nicht näher beschriebenen Ausführungsformen können die Kammerwände 46 als Kühlmäntel ausgebildet sein, beispielsweise durch eine doppelwandige Ausführung und ein flüssiges Kühlmedium dazwischen.

Die erfindungsgemäße Vorrichtung und das Verfahren ermöglicht nicht nur das BFS-Verfahren für temperatursensitive Füllguter zu nutzen. Ein weiterer erfindungsgemäßer Vorteil ist - bei Verwendung teilkristalliner Materialien wie LDPE, HDPE, PP oder PET - die gezielte Beeinflussung deren Kristallisation, um damit Einfluss zu nehmen auf die optischen, mechanischen, thermischen und chemischen Eigenschaften der Behältererzeugnisse.

**In** weiteren nicht näher beschriebenen Ausführungsformen können die Behältererzeugnisse 12 in der erfindungsgemäßen Vorrichtung optional auch simultan mit energiereicher Strahlung, beispielsweise in Form von Beta-Strahlung, UV-Strahlung, Licht oder Lichtimpulsen, zur Reduktion der mikrobiologischen Belastung des Inhalts behandelt werden. Ebenso ist anstelle einer Kühlung zumindest zeitweise eine Wärmebehandlung in der Nachbehandlungszone 26 möglich, beispielsweise durch Heißluft, Mikrowellen und/oder IR-Strahlung, zur Homogenisierung oder zur Keimreduktion des Behälterinhalts.

Bei einem konkreten Ausführungsbeispiel haben sich sehr gute Kühlergebnisse erzielen lassen, wenn jeweils ein Block aus 15 miteinander verbundenen Behältererzeugnissen 12 eingesetzt wird mit einem Blockmaß von Breite x Höhe x Tiefe (BHT) von ca. 184 mm x 53 mm x 10 mm.

Bevorzugt soll dann der jeweilige Kühlschacht, gebildet aus den Durchgangsschächten 32, 40 und gegebenenfalls 42, eine Dimensionierung aufweisen mit einer Breite x Höhe x Tiefe von ca. 210 mm x 250 mm x 13 mm, wobei die Höhe der Vorkammer in Form des ersten Durchgangsschachtes 32 ca. 59 mm und die der Hauptkammer in Form des zweiten Durchgangsschachtes 40 ca. 105 mm beträgt.

Als Düsen respektive als jeweiliger Kühleinlass 50 dient eine Mehrkanal-Flachstrahldüse "Wisperblatt" der Firma Lechler GmbH aus Metzingen. Als Kaltluft-Erzeuger hat sich der Typ Colder von der Firma Karger GmbH aus Dietzenbach bewährt.

Bevorzugt soll die Kühlluft über die Düsen respektive den jeweiligen Einlass 50 bei ca. -10 °C erfolgen mit einem Volumenstrom auf die Behältererzeugnisse 12 innerhalb des Blockes von ca. 400 Normliter/min. Hieraus ergibt sich eine sehr kurze Verweilzeit von ca. 8 Sekunden je Kammer 44 für das zu kühlende Produkt.

Mit der vorstehend beschriebenen Lösung ist eine energieeffiziente und wirtschaftlich vorteilhafte Vorrichtung nebst einem Verfahren zur Nachbehandlung, insbesondere Kühlung von befüllten und verschlossenen BFS-Behältererzeugnissen 12 im Reinraum, insbesondere BFS-Ampullen für medizinische Zwecke, geschaffen.

## Patentansprüche

1. Vorrichtung zum Nachbehandeln, insbesondere zum Kühlen, von Behältererzeugnissen (12), die mittels eines Blasform-, Füll- und Schließverfahrens hergestellt sind und die einer Nachbehandlungszone (26) zuführbar sind, die auf das jeweilige Behältererzeugnis (12) eine beeinflussende, insbesondere kühlende, Wirkung ausübt, wobei die Behältererzeugnisse (12) getrennt voneinander vereinzelt oder in einzelne, voneinander getrennte Gruppen (28) mit mehreren Behältererzeugnissen (12) zusammengefasst in die Nachbehandlungszone (26) eintreten, die mit mindestens einem Steuermittel (30) versehen auf die Behältererzeugnisse (12) einwirkend deren Aufenthaltsdauer in der Nachbehandlungszone (26) bestimmen, **dadurch gekennzeichnet,**
**dass** die Behältererzeugnisse (12) schwerkraftunterstützt im freien Fall die Nachbehandlungszone (26) bis zum Wirksamwerden des jeweiligen Steuermittels (30) auf die Behältererzeugnisse (12) durchqueren.

2. . Vorrichtung nach Anspruch 1, **dadurch gekennzeichnet, dass** in einem der Nachbehandlung vorangehenden Herstellschritt das jeweilige Behältererzeugnis (12) zumindest teilweise von einem bei der Herstellung entstehenden Rahmenabfall (14) mittels einer Trenn- oder Stanzeinrichtung (16) getrennt ist.

3. . Vorrichtung nach Anspruch 1 oder 2, **dadurch gekennzeichnet, dass** die Nachbehandlungszone (26) mindestens einen Durchgangsschacht (32) für das Durchschleusen der Behältererzeugnisse (12) aufweist, der bevorzugt bodenseitig mittels des jeweiligen Steuermittels (30) den Ausschleusvorgang aus dem Durchgangsschacht (32) für die Behältererzeugnisse (12) ermöglicht oder stoppt.

4. . Vorrichtung nach Anspruch 3, **dadurch gekennzeichnet, dass** die Nachbehandlungszone (26) entlang einer Falllinie für die Behältererzeugnisse (12) mehrere, hintereinander angeordnete Durchgangsschächte (32, 40, 42) mit den einzelnen Steuermitteln (30) aufweist.

5. . Vorrichtung nach Anspruch 3 oder 4, **dadurch gekennzeichnet, dass** der jeweilige Durchgangsschacht (32, 40, 42) als Kammer (44) ausgebildet ist, die an ihren freien einander gegenüberliegenden Stirnseiten für das Durchschleusen der Behältererzeugnisse (12) offen ist, dass die bodenseitige Öffnung mittels der Steuermittel (30), vorzugsweise unter Einbezug eines verfahrbaren Bodens (34), verschließbar ist, und dass die einander gegenüberliegenden Behälterwände der Behältererzeugnisse (12) entlang der benachbarten Kammerwände (46) der jeweiligen Kammer (44) mit einem vorgebbaren durchschnittlichen Abstand durchgeschleust sind.

6. . Vorrichtung nach Anspruch 5, **dadurch gekennzeichnet, dass** jede Kammer (44) mindestens einen Einlass (50) für ein Temperiermedium, wie ein Kühlfluid, aufweist.

7. . Vorrichtung nach Anspruch 6, **dadurch gekennzeichnet, dass** parallel zu den jeweiligen Kammerwänden (46) einer Kammer (44) mehrere Eintrittsdüsen (50) angebracht sind, die mit ihrer Abgabeseite die Kammerwand (46) durchgreifen und dergestalt das Temperiermedium in den Durchschleusraum der Kammer (44) einbringen, vorzugsweise an einer Stelle, bei der die Behältererzeugnisse (12) in der Kammer (44) mittels den Steuermitteln (30) derart angehalten sind, dass das Temperiermedium, vorzugsweise nahe dem Boden des Behältererzeugnisses (12) und vorzugsweise in einem rechten Winkel, auf das Behältererzeugnis (12) und/oder den Behälterinhalt trifft.

8. . Vorrichtung nach einem der Ansprüche 5 bis 7, **dadurch gekennzeichnet, dass** das jeweilige Kammervolumen einer Kammer (44) nicht größer als das 30-fache des Volumens des jeweiligen Behältererzeugnisses (12) ist, bevorzugt kleiner als das 20-fache.

9. . Vorrichtung nach einem der Ansprüche 3 bis 8, **dadurch gekennzeichnet, dass** der jeweilige Durchgangsschacht (32, 40, 42) zwischen einer Übernahmeposition für das Einschleusen der Behältererzeugnisse (12) und einer Übergabeposition für deren Ausschleusen mittels einer Verfahreinrichtung (52) hin- und herbewegbar ist.

10. . Verfahren zum Nachbehandeln von Behältererzeugnissen (12), die insbesondere nach einem Blasform-, Füll- und Schließverfahren hergestellt werden, unter Verwendung einer Vorrichtung nach einem der vorstehenden Ansprüche, **dadurch gekennzeichnet, dass** die Behältererzeugnisse (12) vereinzelt oder in Gruppen (28) zusammengefasst in die Nachbehandlungszone (26) eingebracht werden und dass mittels mindestens eines Steuermittels (30) die Aufenthaltsdauer der jeweiligen Behältererzeugnisse (12) in der Nachbehandlungszone (26) vorgegeben wird.

11. . Verfahren nach Anspruch 10, **dadurch gekennzeichnet, dass** das Eintragen eines Temperiermediums, insbesondere eines Kühlfluids, in die Nachbehandlungszone (26) diskontinuierlich durchgeführt wird, bevorzugt wird der Eintrag während des Einbringens des jeweiligen Behältererzeugnisses (12) in die Nachbehandlungszone (26) reduziert.

## Claims

1. Device for the post-treatment, in particular the cooling, of container products (12) which are produced using a blow-fill-seal method and which can be supplied to a post-treatment area (26) that performs an influencing, in particular cooling, action on each container product (12), the container products (12) entering the post-treatment area (26) either individually in a manner separated from one another or in a manner combined into individual, separate groups (28) comprising a plurality of container products (12), said post-treatment area (26) being provided with at least one control means (30) which, by influencing the container products (12), determines how long they stay in the post-treatment area, **characterised in that**
the container products (12) traverse the post-treatment area (26) in free fall under the effect of gravity until the relevant control means (30) acts upon the container products (12).

2. Device according to claim 1, **characterised in that**, in a production step preceding the post-treatment, each container product (12) is at least partly detached, by means of a detachment or punching apparatus (16), from frame waste (14) created during production.

3. Device according to claim 1 or claim 2, **characterised in that** the post-treatment area (26) has at least one drop shaft (32) for channelling the container products (12) through, the process of discharging the container products (12) out of the drop shaft (32) preferably being enabled or stopped by said drop shaft at the bottom thereof using the associated control means (30).

4. Device according to claim 3, **characterised in that**, along a fall line for the container products (12), the post-treatment area (26) has a plurality of drop shafts (32, 40, 42) arranged one behind the other and comprising the individual control means (30).

5. Device according to claim 3 or claim 4, **characterised in that** each drop shaft (32, 40, 42) is formed as a chamber (44) which is open at its free, opposite end faces to channel the container products (12) through, **in that** the bottom opening can be sealed using the control means (30), preferably by incorporating a movable bottom (34), and **in that** the opposite container walls of the container products (12) are channelled along the adjacent chamber walls (46) of each chamber (44) at a predeterminable average distance therefrom.

6. Device according to claim 5, **characterised in that** each chamber (44) has at least one intake (50) for a temperature-control medium such as a cooling fluid.

7. Device according to claim 6, **characterised in that** a plurality of inlet nozzles (50) are attached in parallel with the chamber walls (46) of each chamber (44), said inlet nozzles penetrating the chamber wall (46) by their discharge side and thus introducing the temperature-control medium into the channelling space of the chamber (44), preferably at a point at which the control means (30) bring the container products (12) to a stop in the chamber (44) such that the temperature-control medium strikes the container product (12) and/or the container contents preferably near the bottom of the container product (12) and preferably at a right angle.

8. Device according to any of claims 5 to 7, **characterised in that** the chamber volume of each chamber (44) is no greater than 30 times, preferably is less than 20 times, the volume of each container product (12).

9. Device according to any of claims 3 to 8, **characterised in that**, by means of a displacement apparatus (52), each drop shaft (32, 40, 42) is movable back and forth between an acceptance position for the container products (12) to be fed in and a transfer position for the container products to be discharged.

10. Method for the post-treatment of container products (12) produced in particular according to a blow-fill-seal method, using a device according to any of the preceding claims, **characterised in that** the container products (12) are introduced into the post-treatment area (26) either individually or in a manner combined in groups (28), and **in that** at least one control means (30) predetermines how long each container product (12) stays in the post-treatment area (26).

11. Method according to claim 10, **characterised in that** a temperature-control medium, in particular a cooling fluid, is input into the post-treatment area (26) in a non-continuous manner, the input preferably being reduced while each container product (12) is being introduced into the post-treatment area (26).

## Revendications

1. Dispositif de post-traitement,
en particulier pour le refroidissement de produits (12) de type récipient, qui sont fabriqués au moyen d'un procédé de moulage par soufflage, remplissage et fermeture et qui peuvent être envoyés à une zone (26) de post-traitement, qui exerce, sur le produit (12) de type récipient respectif, un effet l'influençant, en particulier refroidissant, dans lequel les produits (12) de type récipient entrent, individualisés les uns des autres, de manière séparée ou rassemblés en des groupes (28) individualisés séparés les uns des autres ayant plusieurs produits (12) de type récipient, dans la zone (26) de post-traitement qui, pourvue d'au moins un moyen (30) de commande agissant sur les produits (12) de type récipient, détermine leur durée de séjour dans la zone (26) de post-traitement,
**caractérisé**
**en ce que** les produits (12) de type récipient, sous l'effet de la force de la gravité, traversent en chute libre la zone (26) de post-traitement jusqu'à ce que le moyen (30) devienne actif sur les produits (12) de type récipient.

2. Dispositif suivant la revendication 1, **caractérisé en ce que**, dans un stade de production précédent de post-traitement, le produit (12) respectif de type récipient est, au moyen d'un dispositif (16) de séparation ou de poinçonnage, séparé au moins en partie d'un déchet (14) de cadre se créant à la production.

3. Dispositif suivant la revendication 1 ou 2, **caractérisé en ce que** la zone (26) de post-traitement a au moins un puits (32) de passage pour l'éclusage de produits (12) de type récipient qui, de préférence du côté du fond, au moyen du moyen (30) respectif de commande, rend possible ou arrête l'opération d'éclusage du puits (32) de passage pour les produits (12) de type récipient.

4. Dispositif suivant la revendication 3, **caractérisé en ce que** la zone (26) de post-traitement a, le long d'une ligne de chute pour les produits (12) de type récipient, plusieurs puits (32, 40, 42) de passage disposés les uns derrière les autres avec leur moyen (30) individuel de commande.

5. Dispositif suivant la revendication 3 ou 4, **caractérisé en ce que** le puits (32, 40, 42) respectif de passage est constitué sous la forme d'une chambre (44), qui est ouverte sur ses côtés frontaux libres opposés l'un à l'autre pour l'éclusage des produits (12) de type récipient, **en ce que** l'ouverture du côté du fond peut, au moyen du moyen (30) de commande, être fermée, de préférence en incluant un fond (34) pouvant être déplacé, et **en ce que** les parois opposées l'une à l'autre de récipients des produits (12) de type récipient sont éclusés le long des parois (46) voisines de la chambre (44) respective à une distance moyenne pouvant être donnée à l'avance.

6. Dispositif suivant la revendication 5, **caractérisé en ce que** chaque chambre (44) a au moins une entrée (50) pour un fluide de mise en température, comme un fluide réfrigérant.

7. Dispositif suivant la revendication 6, **caractérisé en ce que**, parallèlement aux parois (46) respectives d'une chambre (44), sont disposées plusieurs buses (50) d'entrée, qui, par leur côté de distribution, traversent la paroi (46) de la chambre et introduisent le fluide de mise en température dans l'espace d'éclusage de la chambre (44), de préférence en un endroit où les produits (12) de type récipient sont maintenus dans la chambre (44) au moyen du moyen (30) de commande, de manière à ce que le fluide de mise en température rencontre, de préférence à proximité du fond du produit (12) de type récipient et de préférence sous un angle droit, le produit (12) de type récipient et/ou le contenu du récipient.

8. Dispositif suivant l'une des revendications 5 à 7, **caractérisé en ce que** le volume respectif d'une chambre (44) n'est pas plus grand que 30 fois le volume du produit (12) respectif de type récipient en étant, de préférence plus petit que 20 fois.

9. Dispositif suivant l'une des revendications 3 à 8, **caractérisé en ce que** le puits (32, 40, 42) respectif de passage peut aller et venir, au moyen d'un dispositif (52) de déplacement, entre une position de prise en charge pour l'entrée des produits (12) de type récipient et une position de distribution pour leur éclusage.

10. Procédé de post-traitement de produits (12) de type récipient, qui sont produits, en particulier par un procédé de moulage par soufflage, remplissage et fermeture, en utilisant un dispositif suivant l'une des revendications précédentes, **caractérisé en ce que** l'on introduit les produits (12) de type récipient individuellement ou rassemblés en groupes (28) dans la zone (26) de post-traitement, et **en ce que**, au moyen d'un moyen (30) de commande, on prescrit la durée de séjour des produits (12) respectifs de type récipient dans la zone (26) de post-traitement.

11. Procédé suivant la revendication 10, **caractérisé en ce que** l'on effectue en discontinu l'entrée d'un fluide de mise en température, en particulier d'un fluide réfrigérant, dans la zone (26) de post-traitement, l'entrée étant, de préférence réduite pendant l'introduction du produit (12) respectif de type récipient dans la zone (26) de post-traitement.
